(19) Europäisches Patentamt
European Patent Office
Office européen des brevets

(11) **EP 3 306 535 B1**

(12) **EUROPEAN PATENT SPECIFICATION**

(45) Date of publication and mention
of the grant of the patent:
**04.12.2019 Bulletin 2019/49**

(51) Int Cl.:
***G06N 3/04*** *(2006.01)*

(21) Application number: **16290197.9**

(22) Date of filing: **10.10.2016**

(54) **RUNTIME OPTIMIZATION OF CONVOLUTIONAL NEURAL NETWORKS**

LAUFZEITOPTIMIERUNG VON NEURALEN FALTUNGSNETZWERKEN

OPTIMISATION DE TEMPS D'EXÉCUTION DE RÉSEAUX NEURONAUX CONVOLUTIONNELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018 Bulletin 2018/15**

(73) Proprietor: **Alcatel Lucent
91620 Nozay (FR)**

(72) Inventors:
• **Bhattacharya, Sourav
  Blanchardstown
  15 Dublin (IE)**
• **Lane, Nicholas
  Cambridge, CB24 6DD (GB)**
• **Kawsar, Fahim
  2018 Antwerpen (BE)**

(74) Representative: **IP HILLS NV
Hubert Frère-Orbanlaan 329
9000 Gent (BE)**

(56) References cited:
**US-A1- 2016 019 456**

• **Cheng Tai ET AL: "Convolutional neural networks with low-rank regularization", , 14 February 2016 (2016-02-14), pages 1-11, XP055360011, arXiv.org Retrieved from the Internet: URL:https://arxiv.org/abs/1511.06067 [retrieved on 2017-03-29]**
• **LANE NICHOLAS D ET AL: "DeepX: A Software Accelerator for Low-Power Deep Learning Inference on Mobile Devices", 2016 15TH ACM/IEEE INTERNATIONAL CONFERENCE ON INFORMATION PROCESSING IN SENSOR NETWORKS (IPSN), IEEE, 11 April 2016 (2016-04-11), pages 1-12, XP032896064, DOI: 10.1109/IPSN.2016.7460664 [retrieved on 2016-04-26]**

## Description

## Technical Field

The present disclosure relates to the field of optimization of convolutional neural networks at runtime.

## Background

Mobile devices, such as wearables and internet of things (IoT) devices, run applications powered with artificial intelligence algorithms. These artificial intelligence algorithms, such as convolutional neural networks, require a large amount of computations and thus need high computing power.

In Cheng Tai, Tong Xiao, Yi Zhang, Xiaogong Wang, Weinan, E. "Convolutional Neural Networks With Low-Rank Regularization", conference paper at ICLR 2016, a method is disclosed for replacing a 4D convolutional kernel with two consecutive kernels with a lower rank, comprising a tensor decomposition scheme, wherein a convolutional kernel in a convolutional neural network, noted as a 4D tensor

$$\mathcal{W} \in \mathbb{R}^{N \times d \times d \times C},$$

is decomposed into a horizontal filter

$$\mathcal{H} \in \mathbb{R}^{N \times 1 \times d \times K},$$

and a vertical filter

$$\mathcal{V} \in \mathbb{R}^{K \times d \times 1 \times C}.$$

## Summary

It is however a drawback that these algorithms require a large amount of computations and thus high power, since mobile devices have limited battery lifetimes. Hence, they need to constantly be recharged.

It is an objective of the present disclosure to alleviate the above drawback and to provide a solution for performing artificial intelligence algorithms, such as in convolutional neural networks, by reducing the number of required computations at runtime.

This objective is achieved, according to a first aspect by the computing system of claim 1.

Since multidimensional convolutional computations may be subdivided into performing convolutions with a set of low order dimensional filters, the computation is simplified compared to the convolutional operation using the original multidimensional filter. Hence, a lesser amount of computations are needed meaning the battery lifetime of the device may be increased.

The overall number of operations of a convolutional neural network using the multidimensional filter requires a certain inference time. Furthermore, the device has a runtime latency requirement, which is, among others, dependent on a processor load. This inference time may, however, exceed the runtime latency requirement. By adapting the number of low order dimensional filters, based on a time budget, an inference time which the number of low order dimensional filters requires to perform the convolutional operation may be reduced and be smaller than the inference time required by the initial filter. This allows to balance between inference time and computational complexity.

Since less time is required to perform the calculation, the processor load of the device is reduced resulting in an increase of its battery lifetime.

The initial filter is approximated by a number of low order dimensional filters. The number of the low order dimensional filters may also be adapted based on a time budget. Thus, this number of low order dimensional filters is reconstructed again to a multidimensional filter by a reconstruction module, which therefore may differ from the initial multidimensional filter. Thus, an error calculation module calculates a difference between the reconstructed filter and the initial filter. The calculated difference is a reconstruction error and based on this reconstruction error the number of low order dimensional filters may be adapted again in order to minimize the reconstruction error.

The number of low order dimensional filters may be adapted in such a way that the convolutional operation performed by the number of low order dimensional filters generates a multidimensional output dataset which differs in an unacceptable way from a multidimensional output dataset if the initial filter was used. There is thus no need to calculate an output dataset with the original filter to derive the error in the approximation.

According to an embodiment, the difference between the multidimensional filter and the reconstructed multidimensional filter is calculated using a root-mean-squared error method.

According to an embodiment, the system further comprises an image filter configured to filter an input image by the convolutional neural network.

An input image filtered by an image filter using the convolutional neural network may, for example, result in image understanding, recognition and/or segmentation tasks. This way, complex image recognition algorithms may be performed on a battery-powered device.

According to a second aspect the disclosure relates to the method according to claim 4.

According to a third aspect, the disclosure relates to a computer program product comprising instructions which, when the program is executed by a computer, cause the computer to perform the method according to claim 4.

According to a fourth aspect, the disclosure relates to a computer readable storage medium comprising the computer program product according to claim 5.

According to an example, the disclosure relates to a data processing system programmed for carrying out the method according to the second aspect.

## Brief Description of the Drawings

Fig. 1 illustrates a convolutional network comprising a multidimensional filter;

Fig. 2 illustrates a system for optimizing a convolution network; and

Fig. 3 illustrates convolutional network comprising a chain of low order dimensional filters.

## Detailed Description of Embodiment(s)

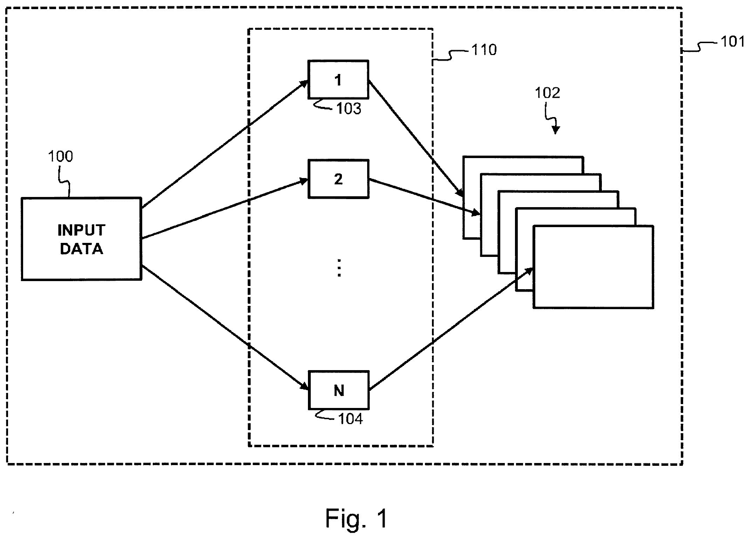

According to an embodiment, the disclosure relates to a computing system for optimization of a convolutional neural network, the convolutional neural network comprising one or more convolutional layers. Figure 1 illustrates such a network with one convolutional layer.

The convolutional network 101 comprises a convolutional layer 110, which comprises a multidimensional filter. The multidimensional filter is presented as N segmented filters, such as 103 and 104. Each segmented filter 103, 104 of the multidimensional filter convolutes input data 100 and generates output data 102.

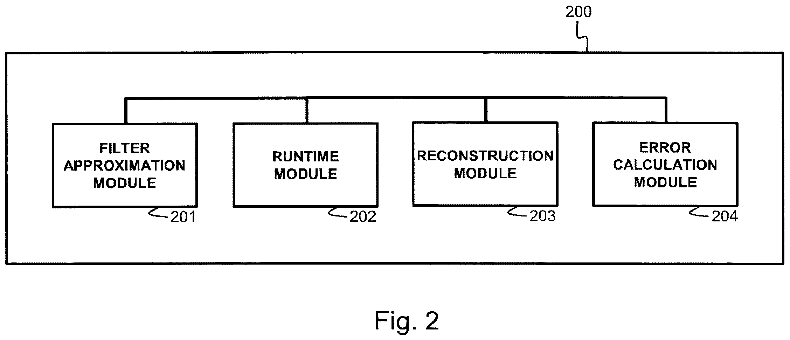

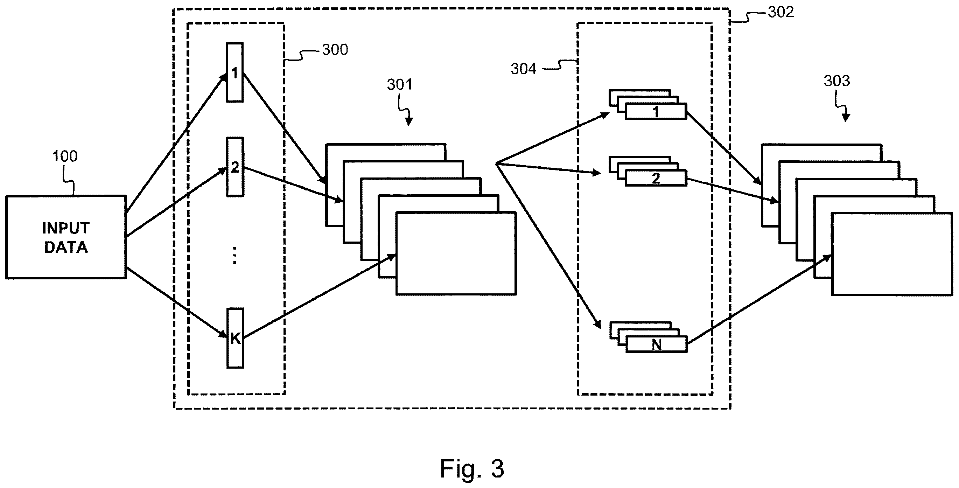

The system, illustrated in Fig. 2, comprises a filter approximation module 201 configured to approximate the multidimensional filter by a number of low order-dimensional filters in one or more dimensions of the multidimensional filter. Figure 3 illustrates such an approximation.

The N segmented filters like 103, 104, may be, for example, two-dimensional. The filter approximation module 201 of the system 200 approximates the two-dimensional filters by vertical one-dimensional filters 300 and by horizontal one-dimensional filters 304. Thus, the input data 100 is first convoluted by the one-dimensional vertical filters 300, thereby obtaining an intermediate data set 301 and subsequently this intermediate data 301 is convoluted by the one-dimensional horizontal filters 304. Finally, an approximated set of multidimensional output data 303 is generated.

The number of the low order dimensional filters 302 may be adapted by a runtime module 202. Based on a time budget, which is indicative for a runtime latency requirement, the runtime module 202 adapts this number. Since, however, by adapting the number of the low order dimensional filters, in particular decreasing it, the chain 302 becomes an inaccurate approximation of the initial filter. Hence, the system 200 comprises a reconstruction module 203 such that the number of low order dimensional filters 302 is reconstructed into a multidimensional filter. Next, an error calculation module 204 calculates the difference between the original multidimensional filter 110 and the reconstructed multidimensional filter. This difference may, for example, be calculated using a root mean-squared error method. This difference, the reconstruction error, is than compared with a threshold and if the reconstruction error exceeds this threshold, the runtime module 202 will adapt the number of the low order dimensional filters.

## Claims

1. A computing system (200) for optimization of a convolutional neural network (101), the convolutional neural network comprising one or more convolutional layers, a convolutional layer comprising a multidimensional filter (110), the filter suited to convolute a multidimensional input dataset (100) to a multidimensional output dataset (102), wherein the system comprises:

   - a filter approximation module (201) configured to approximate the multidimensional filter (110) by a number of low order dimensional filters (302) in one or more dimensions of the multidimensional filter (101), wherein a low order dimensional filter is of lower order than the order of the multidimensional filter; and
   - a runtime module (202) configured to adapt the number of low order dimensional filters based on a time budget indicative of a runtime latency requirement; and
   - a reconstruction module (203) configured to calculate a reconstructed multidimensional filter based on the number of low order dimensional filters; and
   - an error calculation module (204) configured to calculate a difference between the multidimensional filter and the reconstructed multidimensional filter, thereby obtaining a reconstruction error; and wherein the runtime module (203) is further configured to adapt the number based on the reconstruction error.

2. The system according to claim 1, wherein the difference between the multidimensional filter and the reconstructed multidimensional filter is calculated using a root-mean-squared error method.

3. The computing system according to claim 1 further comprising an image filter configured to filter an input image by the convolutional neural network.

4. A computer-implemented method for optimizing a convolutional neural network, the convolutional neural network comprising one or more convolutional layers, a convolutional layer comprising a multidimensional filter, the filter suited to convolute a multidimensional input dataset to a multidimensional output dataset, wherein the method comprises approximating the multidimensional filter by a number of low order dimensional filters in one or more dimensions of the multidimensional filter, wherein a low order dimensional filter is of lower order than the order of the multidimensional filter; and adapting the number of low order dimensional filters based on a time budget indicative of a runtime latency requirement; and calculating a reconstructed multidimensional filter based on the number of low order dimensional filters; and calculating a difference between the multidimensional filter and the reconstructed multidimensional filter, thereby obtaining a reconstruction error; and adapting the number based on the reconstruction error.

5.    A computer program product comprising instructions which, when the program is executed by a computer, cause the computer to perform the method of claim 4.

6.    A computer readable storage medium comprising the computer program product according to claim 5.


**Patentansprüche**

1.    Rechensystem (200) zur Optimierung eines neuronalen Faltungsnetzwerks (101), wobei das neuronale Faltungsnetzwerk eine oder mehrere Faltungsschichten umfasst, eine Faltungsschicht, die ein mehrdimensionales Filter (110) umfasst, wobei das Filter geeignet ist, einen mehrdimensionalen Eingangsdatensatz (100) zu einem mehrdimensionalen Ausgangsdatensatz (102) zu falten, wobei das System umfasst:

    - ein Filterannäherungsmodul (201), das dazu ausgelegt ist, das mehrdimensionale Filter (110) durch eine Anzahl von dimensionalen Filtern (302) niedriger Ordnung in einer oder mehreren Dimensionen des mehrdimensionalen Filters (101) anzunähern, wobei ein dimensionaler Filter niedriger Ordnung eine niedrigere Ordnung als die Ordnung des mehrdimensionalen Filters aufweist; und
    - ein Laufzeitmodul (202), das dazu ausgelegt ist, die Anzahl der dimensionalen Filter niedriger Ordnung basierend auf einem Zeitbudget anzupassen, das für eine Laufzeitlatenzanforderung kennzeichnend ist; und
    - ein Rekonstruktionsmodul (203), das dazu ausgelegt ist, ein rekonstruiertes mehrdimensionales Filter basierend auf der Anzahl dimensionaler Filter niedriger Ordnung zu berechnen; und
    - ein Fehlerberechnungsmodul (204), das dazu ausgelegt ist, eine Differenz zwischen dem mehrdimensionalen Filter und dem rekonstruierten mehrdimensionalen Filter zu berechnen, wodurch ein Rekonstruktionsfehler erhalten wird; und wobei das Laufzeitmodul (203) ferner dazu ausgelegt ist, die Anzahl basierend auf dem Rekonstruktionsfehler anzupassen.

2.    System nach Anspruch 1, wobei die Differenz zwischen dem multidimensionalen Filter und dem rekonstruierten multidimensionalen Filter unter Verwendung eines quadratischen Mittelwert Fehlerverfahrens berechnet wird.

3.    Rechensystem nach Anspruch 1, ferner umfassend ein Bildfilter, das dazu ausgelegt ist, ein Eingangsbild durch das neuronale Faltungsnetzwerk zu filtern.

4.    Computerimplementiertes Verfahren zur Optimierung eines neuronalen Faltungsnetzwerks, wobei das neuronale Faltungsnetzwerk eine oder mehrere Faltungsschichten umfasst, eine Faltungsschicht, die ein mehrdimensionales Filter umfasst, wobei das Filter geeignet ist, einen mehrdimensionalen Eingangsdatensatz zu einem mehrdimensionalen Ausgangsdatensatz zu falten, wobei das Verfahren das Annähern des mehrdimensionalen Filters durch eine Anzahl von dimensionalen Filtern niedriger Ordnung in einer oder mehreren Dimensionen des mehrdimensionalen Filters umfasst, wobei ein dimensionaler Filter niedriger Ordnung eine niedrigere Ordnung aufweist als die Ordnung des mehrdimensionalen Filters; und
Anpassen der Anzahl von dimensionalen Filtern niedriger Ordnung basierend auf einem Zeitbudget, das für eine Laufzeitlatenzanforderung kennzeichnend ist; und Berechnen eines rekonstruierten multidimensionalen Filters basierend auf der Anzahl dimensionaler Filter niedriger Ordnung; und Berechnen einer Differenz zwischen dem multidimensionalen Filter und dem rekonstruierten multidimensionalen Filter, wodurch ein Rekonstruktionsfehler erhalten wird; und Anpassen der Anzahl basierend auf dem Rekonstruktionsfehler.

5.    Computerprogrammprodukt, umfassend Anweisungen, die, wenn das Programm von einem Computer ausgeführt wird, den Computer veranlassen, das Verfahren nach Anspruch 4 durchzuführen.

6.    Computerlesbares Speichermedium, umfassend das Computerprogrammprodukt nach Anspruch 5.


**Revendications**

1.    Système informatique (200) pour l'optimisation d'un réseau neuronal convolutif (101), le réseau neuronal convolutif comprenant une ou plusieurs couches convolutives, une couche convolutive comprenant un filtre multidimensionnel (110), le filtre étant approprié pour convoluer un ensemble de données d'entrée multidimensionnel (100) en un ensemble de données de sortie multidimensionnel (102), le système comprenant :

- un module d'approximation de filtre (201) configuré pour approximer le filtre multidimensionnel (110) par un nombre de filtres dimensionnels d'ordre inférieur (302) dans une ou plusieurs dimensions du filtre multidimensionnel (101), un filtre dimensionnel d'ordre inférieur étant d'un ordre inférieur à l'ordre du filtre multidimensionnel ; et
- un module de temps d'exécution (202) configuré pour adapter le nombre de filtres dimensionnels d'ordre inférieur sur la base d'un budget temporel représentatif d'une exigence de latence de temps d'exécution ; et
- un module de reconstruction (203) configuré pour calculer un filtre multidimensionnel reconstruit sur la base du nombre de filtres dimensionnels d'ordre inférieur ; et
- un module de calcul d'erreur (204) configuré pour calculer une différence entre le filtre multidimensionnel et le filtre multidimensionnel reconstruit, pour obtenir ainsi une erreur de reconstruction ; et dans lequel le module de temps d'exécution (203) est également configuré pour adapter le nombre sur la base de l'erreur de reconstruction.

2. Système selon la revendication 1, dans lequel la différence entre le filtre multidimensionnel et le filtre multidimensionnel reconstruit est calculée au moyen d'un procédé d'erreur des moindres carrés.

3. Système informatique selon la revendication 1 comprenant en outre un filtre d'image configuré pour filtrer une image d'entrée par le réseau neuronal convolutif.

4. Procédé mis en œuvre par ordinateur pour optimiser un réseau neuronal convolutif, le réseau neuronal convolutif comprenant une ou plusieurs couches convolutives, une couche convolutive comprenant un filtre multidimensionnel, le filtre étant approprié pour convoluer un ensemble de données d'entrée multidimensionnel en un ensemble de données de sortie multidimensionnel, le procédé comprenant l'approximation du filtre multidimensionnel par un nombre de filtres dimensionnels d'ordre inférieur dans une ou plusieurs dimensions du filtre multidimensionnel, un filtre dimensionnel d'ordre inférieur étant d'un ordre inférieur à l'ordre du filtre multidimensionnel ; et adapter le nombre de filtres dimensionnels d'ordre inférieur sur la base d'un budget temporel représentatif d'une exigence de latence de temps d'exécution ; et calculer un filtre multidimensionnel reconstruit sur la base du nombre de filtres dimensionnels d'ordre inférieur ; et calculer une différence entre le filtre multidimensionnel et le filtre multidimensionnel reconstruit, pour obtenir ainsi une erreur de reconstruction ; et adapter le nombre sur la base de l'erreur de reconstruction.

5. Produit-programme informatique comprenant des instructions qui, lorsque le programme est exécuté par un ordinateur, conduisent l'ordinateur à effectuer le procédé de la revendication 4.

6. Support de stockage lisible par ordinateur comprenant le produit-programme informatique selon la revendication 5.

Fig. 1

EP 3 306 535 B1

200

FILTER
APPROXIMATION
MODULE
201

RUNTIME
MODULE
202

RECONSTRUCTION
MODULE
203

ERROR
CALCULATION
MODULE
204

Fig. 2

Fig. 3

EP 3 306 535 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHENG TAI ; TONG XIAO ; YI ZHANG ; XIAOGONG WANG ; WEINAN, E.** Convolutional Neural Networks With Low-Rank Regularization. *conference paper at ICLR 2016,* 2016